# EUROPÄISCHE PATENTANMELDUNG

(11) **EP 3 970 471 A1**
(43) Veröffentlichungstag der Anmeldung: **23.03.2022**
(21) Anmeldenummer: 21189003.3
(22) Anmeldetag: 02.08.2021
(51) Int. Cl.: A01D 43/073, A01D 43/08

(54) **VERFAHREN ZUR STEUERUNG DER ERNTEGUTÜBERLADUNG**

(30) Priorität: 21.09.2020 DE 102020124509
(71) Anmelder: CLAAS E-Systems GmbH, 49201 Dissen (DE)
(72) Erfinder: Lücke, Andreas, 33184 Altenbeken (DE); Smolnik, Ivan, 33330 Gütersloh (DE)
(74) Vertreter: CLAAS Gruppe

(57) **Zusammenfassung**

Verfahren zur Steuerung der Erntegutüberladung von einer selbstfahrenden landwirtschaftlichen Erntemaschine in den Ladebehälter eines Transportfahrzeugs, wobei die Erntemaschine eine Überladeeinrichtung mit der Erntegut von der Erntemaschine in den Ladebehälter überladen wird umfasst, wobei eine relative Lage des Ladebehälters gegenüber der Erntemaschine ermittelt wird, wobei eine relative Sollposition des Ladebehälters bestimmt wird, wobei das Transportfahrzeug so gesteuert wird, dass die relative Lage des Ladebehälters im Wesentlichen der relativen Sollposition entspricht, wobei bei der Steuerung mindestens eine Information über eine zukünftige

Fahrzustandsänderungen der Erntemaschine berücksichtigt wird.

## Beschreibung

Die Erfindung betrifft ein System und ein Verfahren zur Steuerung der Erntegutüberladung von einer selbstfahrenden landwirtschaftlichen Erntemaschine in den Ladebehälter eines Transportfahrzeugs.

Aus der DE102011002071A1 ist ein System zur Steuerung der Erntegutüberladung von einer selbstfahrenden landwirtschaftlichen Erntemaschine in den Ladebehälter eines Transportfahrzeugs bekannt. Dieses System steuert das Transportfahrzeug in eine zum Überladen in den Ladebehälter geeignete Relativposition des Transportfahrzeugs gegenüber der Erntemaschine. Einer Annäherung an einen kritischen Zustand wird dabei entgegengewirkt.

Aufgabe der Erfindung ist es ein solches System zu verbessern.

Die Erfindung umfasst ein Verfahren zur Steuerung der Erntegutüberladung von einer selbstfahrenden landwirtschaftlichen Erntemaschine in den Ladebehälter eines Transportfahrzeugs, wobei die Erntemaschine eine Überladeeinrichtung, mit der Erntegut von der Erntemaschine in den Ladebehälter überladen wird, umfasst, wobei eine relative Lage des Ladebehälters gegenüber der Erntemaschine ermittelt wird, wobei eine relative Sollposition des Ladebehälters bestimmt wird, wobei das Transportfahrzeug so gesteuert wird, dass die relative Lage des Ladebehälters im Wesentlichen der relativen Sollposition entspricht, wobei bei der Steuerung mindestens eine Information über eine zukünftige Fahrzustandsänderungen der Erntemaschine berücksichtigt wird.

Die Erfindung umfasst auch ein System zur Steuerung der Erntegutüberladung von einer selbstfahrenden landwirtschaftlichen Erntemaschine in den Ladebehälter eines Transportfahrzeugs, umfassend eine der Erntemaschine zugeordnete Überladeeinrichtung, die zur Überladung von Erntegut von der Erntemaschine in den Ladebehälter vorgesehen ist, und eine Erkennungseinrichtung, welche dazu vorgesehen und eingerichtet ist eine relative Lage des Ladebehälters gegenüber der Erntemaschine zu ermitteln, wobei eine relative Sollposition des Ladebehälters vorgegeben ist, wobei ein Fahrregler dazu vorgesehen und eingerichtet ist das Transportfahrzeug so zu steuern, dass die relative Lage des Ladebehälters im Wesentlichen der relativen Sollposition entspricht, wobei der Fahrregler dazu vorgesehen und eingerichtet ist, mindestens eine Information über eine zukünftige Fahrzustandsänderungen der Erntemaschine zu berücksichtigen.

Die landwirtschaftliche Erntemaschine ist bevorzugt ein Feldhäcksler oder ein Mähdrescher. Auch andere selbstfahrende oder gezogene Erntemaschinen sind möglich. Das Transportfahrzeug mit dem Ladebehälter ist bevorzugt ein Traktor mit einem Anhänger oder ein Lastkraftwagen.

Die relative Sollposition beschreibt die räumliche Lage des Ladebehälters im Verhältnis zum Erntefahrzeug. Durch die Vorgabe der Sollposition wird der Ladebehälter in eine Position gebracht, dass das Erntegut auch bei unvermeidlichen Abweichungen der relativen Lage des Transportfahrzeugs von der relativen Sollposition in den Ladebehälter überladen wird.

Durch die Informationen über eine zukünftige Fahrzustandsänderungen ist es möglich, den Fahrzustand des Transportfahrzeugs früher anzupassen und dadurch kritische Zustände zu vermeiden. Die Reaktion auf Fahrzustandsänderungen rein aus der äußeren Erkennung ermöglichen nur eine verzögerte Reaktion des Transportfahrzeugs. Auch die Übertragung der aktuellen Geschwindigkeit oder des aktuellen Lenkwinkels der Erntemaschine ermöglicht nur eine verzögerte Reaktion des Transportfahrzeugs.

In einer bevorzugten Ausgestaltung ist die Information über zukünftige Fahrzustandsänderungen der Erntemaschine eine Information über eine Geschwindigkeitsänderung und/oder eine Fahrtrichtungsänderung. Durch die Berücksichtigung einer zukünftigen Geschwindigkeitsänderung der Erntemaschine kann die Geschwindigkeit des Begleitfahrzeugs besser angepasst werden und damit die Sollposition genauer eingehalten werden. Durch eine Berücksichtigung einer zukünftigen Fahrtrichtungsänderung der Erntemaschine kann die Fahrtrichtung und ggf. die Geschwindigkeit des Begleitfahrzeugs besser angepasst werden und damit die Sollposition genauer eingehalten werden. Die Geschwindigkeit des Begleitfahrzeugs muss bspw. bei Kurvenfahrten der Erntemaschine angepasst werden, wenn das Begleitfahrzeug in der Kurve neben der Erntemaschine bleiben soll und daher eine weitere bzw. engere Kurve als die Erntemaschine fahren muss.

In einer bevorzugten Ausgestaltung wird eine Fahrgeschwindigkeit der Erntemaschine von einem Geschwindigkeitsregler gesteuert, wobei dem Geschwindigkeitsregler eine Sollgeschwindigkeit vorgegeben wird und die geänderte Sollgeschwindigkeit als zukünftige Fahrzustandsänderungen der Erntemaschine berücksichtigt wird. Durch die Berücksichtigung der geänderten Sollgeschwindigkeit kann die Fahrgeschwindigkeit des Transportfahrzeugs früher angepasst werden. Weiterhin kann bei der Anpassung der Fahrgeschwindigkeit die Größe der Geschwindigkeitsänderung berücksichtigt werden.

In einer bevorzugten Ausgestaltung ist das Erntefahrzeug mit zumindest einem Sensor zur Erkennung eines Vorfeldes ausgestattet, wobei der Sensor eine Erntegutmenge vor dem Erntefahrzeug erkennt, wobei aus der Erntegutmenge eine zukünftige Fahrzustandsänderungen der Erntemaschine prognostiziert wird und die Information über die zukünftige Fahrzustandsänderungen der Erntemaschine bei der Steuerung des Transportfahrzeugs berücksichtigt wird. Wird vor der Erntemaschine eine steigende Erntegutmenge erfasst, so ist davon auszugehen, dass die Fahrgeschwindigkeit der Erntemaschine sinken wird. Bei der Steuerung der Fahrgeschwindigkeit des Transportfahrzeugs kann dies berücksichtigt werden, um die Fahrgeschwindigkeit des Transportfahrzeugs besser an die Fahrgeschwindigkeit der Erntemaschine anzupassen.

In einer bevorzugten Ausgestaltung ist das Erntefahrzeug mit zumindest einem Sensor zur Erkennung eines Vorfeldes ausgestattet, wobei der Sensor zumindest ein Hindernis vor dem Fahrzeug erkennt, wobei aus dem Hindernis eine zukünftige Fahrzustandsänderungen der Erntemaschine prognostiziert wird und die Information über die zukünftige Fahrzustandsänderungen der Erntemaschine bei der Steuerung des Transportfahrzeugs berücksichtigt wird. Die Art der Fahrzustandsänderung kann von der Art des Hindernisses abhängen. Bevorzugt unterscheidet der Sensor unterschiedliche Hindernisse. Der Sensor ist also zur Unterscheidung unterschiedlicher Hindernisse ausgestaltet. Erfordert das Hindernis eine Umfahrung, so kann das Transportfahrzeug die Fahrtrichtungsänderung gleichzeitig mit der Erntemaschine durchführen. Kann das Hindernis mit reduzierter Geschwindigkeit überfahren werden, so kann die Fahrgeschwindigkeit des Transportfahrzeugs gleichzeitig mit der Fahrgeschwindigkeit der Erntemaschine angepasst werden. Erfordert das Hindernis ein Anhalten der Erntemaschine, so kann das Transportfahrzeug gleichzeitig mit der Erntemaschine angehalten werden.

In einer bevorzugten Ausgestaltung ist das Erntefahrzeug mit zumindest einem Sensor zur Erkennung eines Vorfeldes ausgestattet, wobei der Sensor zumindest eine Form eines Erntegutschwads erkennt, wobei aus der Form des Erntegutschwads eine zukünftige Fahrzustandsänderungen der Erntemaschine prognostiziert wird und die Information über die zukünftige Fahrzustandsänderungen der Erntemaschine bei der Steuerung des Transportfahrzeugs berücksichtigt wird. Die Form des Erntegutschwads kann bspw. eine Verschwenkung des Schwads sein, die eine Lenkbewegung der Erntemaschine notwendig macht. Durch die Information über die zukünftige Lenkbewegung kann das Transportfahrzeug die Richtungsänderung gleichzeitig mit der Erntemaschine durchführen. Die Form des Erntegutschwads kann auch Hinweise auf das Volumen des Schwads und damit auf die Erntegutmenge enthalten.

Der Sensor zur Erkennung des Vorfeldes kann bspw. eine Kamera oder ein LIDAR sein. Durch die Kombination mehrerer unterschiedlicher Sensoren, die bevorzugt überlappende Bereiche des Vorfeldes erfassen, kann die Informationsdichte gesteigert werden. Kameras, insbesondere 3D-Kameras, LIDAR oder einer Kombination können vielfältige Informationen über das Vorfeld der Erntemaschine sammeln. Beispielsweise können Hindernisse, Erntegutschwaden oder Erntegutmengen erkannt werden.

In einer bevorzugten Ausgestaltung wird das Transportfahrzeug von einem Fahrregler gesteuert und dem Fahrregler werden Informationen über zukünftige Fahrzustandsänderungen der Erntemaschine zugeführt. Der Fahrregler kann die Informationen über zukünftige Fahrzustandsänderungen der Erntemaschine frühzeitig berücksichtigen und dadurch die relative Sollposition besser einhalten.

In einer bevorzugten Ausgestaltung stellen das Transportfahrzeug und die Erntemaschine eine Funkverbindung zur Kommunikation her. Über eine Funkverbindung ist ein sehr einfacher Austausch von Informationen über zukünftige Fahrzustandsänderungen möglich. Eine solche Funkverbindung kann bspw. als WLAN-Verbindung, Mobilfunkverbindung oder Bluetooth-Verbindung ausgestaltet sein.

In einer bevorzugten Ausgestaltung weist die Erkennungseinrichtung eine Kamera, ein LIDAR oder ein System aus mehreren Kameras und/oder LIDAR auf. Insbesondere Stereokameras oder ähnliche 3D-Kameras sind zur Erkennung des Ladebehälters gut geeignet. Über die Kombination mit LIDAR kann die Erkennung weiter verbessert werden.

In einer bevorzugten Ausgestaltung ist die Kamera und/oder das LIDAR an der Erntemaschine angeordnet und zur optischen Erfassung des Ladebehälters ausgerichtet. Durch die Anordnung an der Erntemaschine kann die relative Lage des Ladebehälters bzgl. der Erntemaschine besonders gut bestimmt werden.

Die Erfindung wird nachstehend anhand eines Ausführungsbeispiels näher erläutert. Die Figuren zeigen in
- Fig. 1:: eine schematische Rückansicht eines Feldhäckslers beim seitlichen Überladen von Erntegut in einen Ladebehälter,
- Fig. 2:: eine Draufsicht auf die Situation aus Figur 1,
- Fig. 3:: vereinfachte Darstellung von Figur 2 bei der Aufnahme eines Erntegutschwads.

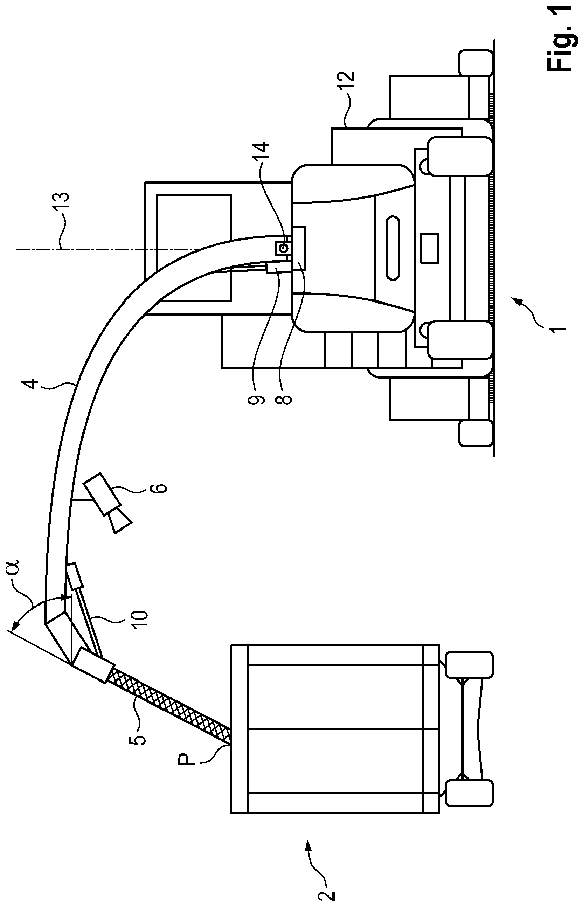

Figur 1 zeigt in schematischer Ansicht von hinten eine Erntemaschine 1, hier einen selbstfahrenden Feldhäcksler, die geerntetes und bearbeitetes Erntegut mittels einer Überladeeinrichtung 4, hier eines Auswurfkrümmers, in Form eines Erntegutstrahls 5 in einen seitlich des Feldhäckslers 1 befindlichen Ladebehälter 2 überlädt. Der Ladebehälter 2 ist Teil eines Anhängers und wird von einem in dieser Ansicht durch den Ladebehälter 2 verdeckten Transportfahrzeug parallel zur Fahrtrichtung des Feldhäckslers 1 gezogen. Wie oben beschrieben können Transportfahrzeug und Ladebehälter auch Teil eines Fahrzeugs bspw. eines Lastkraftwagens sein. Der Erntegutstrahl 5 trifft in einem Zielpunkt P auf den Ladebehälter 2, der innerhalb der Außenwände des Ladebehälters 2 liegt, sodass das Erntegut verlustfrei überladen wird.

Der Zielpunkt P liegt in diesem Beispiel relativ mittig innerhalb des Ladebehälters 2, damit der Erntegutstrahl auch bei unvermeidlichen Abweichungen der relativen Lage des Ladebehälters von der relativen Sollposition innerhalb des Ladebehälters auftrifft. Der hier dargestellte Feldhäcksler umfasst mehrere Aktoren mit denen der Erntegutstrahl 5 gelenkt werden kann. Der Auswurfkrümmer 4 lässt sich durch einen Drehantrieb 8 um eine vertikale Achse 13 gegenüber dem Maschinenrahmen 12 des Feldhäckslers 1 verschwenken und durch einen Hubzylinder 9 um eine horizontale Achse 14 gegenüber dem Maschinenrahmen 12 des Feldhäckslers 1 in der Höhe verschwenken. Mittels eines Klappenstellzylinders 10 lässt sich weiterhin der Abwurfwinkel α des Erntegutstrahls 5 aus dem Auswurfkrümmer 4 einstellen.

An der Überladeeinrichtung 4 ist eine Kamera 6 als Teil einer Erkennungseinrichtung angebracht, welche zur optischen Erfassung des Ladebehälters 2 einschließlich des Zielpunktes P ausgerichtet ist.

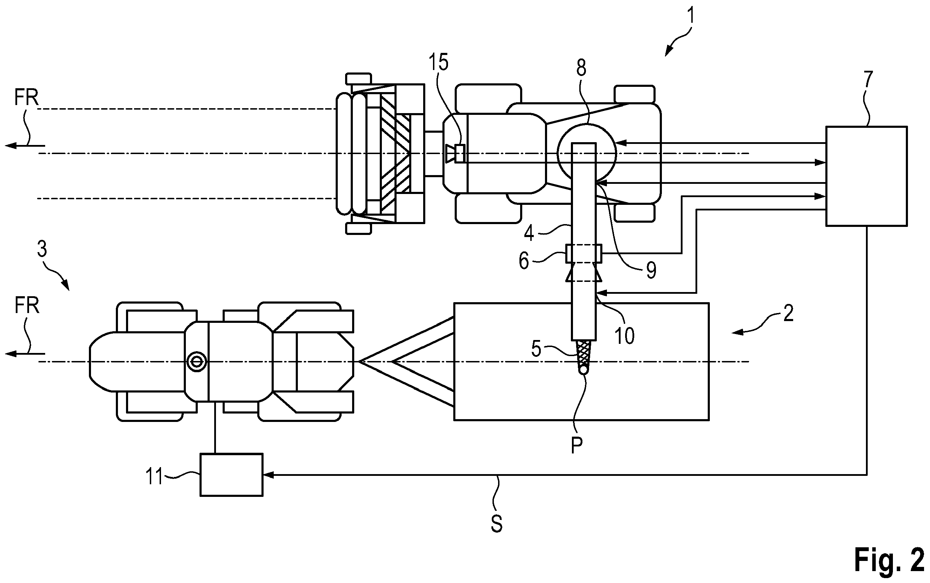

Der in Fjg. 2 gezeigte Feldhäcksler 1 und der vom Transportfahrzeug 3 gezogene Ladebehälter 2 weisen die bereits zu Fig. 1 genannten Merkmale auf. Zusätzlich zur Darstellung gemäß Fig. 1 sind in Fig. 2 das Transportfahrzeug 3, eine Steuereinheit 7, ein Fahrregler 11, eine Kamera 15 sowie schematische Signalleitungen dargestellt, um anhand eines Ausführungsbeispiels die Funktion und Wirkungsweise eines erfindungsgemäßen Systems bzw. Verfahrens zur Steuerung der Erntegutüberladung zu erläutern.

Die Steuereinheit 7 ist bevorzugt Teil der Erntemaschine 1. Der Fahrregler 11 ist bevorzugt Teil des Transportfahrzeugs 3. Die Signalleitungen S sind bevorzugt eine Funkverbindung.

Gemäß Fig. 2 bewegen sich der Feldhäcksler 1 und das Transportfahrzeug 3, hier ein Traktor, an den der als Anhänger ausgestaltete Ladebehälter 2 angehängt ist, mit in etwa gleicher Geschwindigkeit in Fahrtrichtung FR. Die am Auswurfkrümmer 4 angeordnete Kamera 6 erfasst optisch den Ladebehälter 2 (vgl. Fig. 1) und ermittelt anhand einer Bildauswertung (z.B. durch Erkennung der Außenkanten des Ladebehälters 2) unter Berücksichtigung der Stellung des Überladekrümmers 4 die relative Lage des Ladebehälters 2 gegenüber dem Feldhäcksler 1. Die Information wird an eine Steuereinheit 7 übermittelt. Die Steuereinheit 7 ist wiederum mit den Aktoren 8, 9, 10 verbunden und steuert diese unter Berücksichtigung der ermittelten relativen Lage derart an, dass der Erntegutstrahl 5 im Zielpunkt P innerhalb des Ladebehälters 2 auftrifft, um diesen mit Erntegut zu befüllen.

Ein Sensor 15, hier eine Kamera, erfasst das Vorfeld des Feldhäckslers 1. Die vom Sensor erfassten Daten werden an die Steuereinheit 7 weitergeleitet. Die Steuereinheit 7 prognostiziert aus den Daten Informationen über zukünftige Fahrzustandsänderungen. Diese Informationen werden von der Steuereinheit 7 an den Fahrregler 11 des Transportfahrzeugs 3 übermittelt. Der Fahrregler 11 nutzt die Informationen über zukünftige Fahrzustandsänderungen, um die relative Lage des Ladebehälters möglichst dicht an der relativen Sollposition zu halten. Der Fahrregler 11 erreicht dies durch aktiven Eingriff in die Fahrgeschwindigkeit und/oder den Lenkwinkel des Transportfahrzeugs 3.

Im gezeigten Ausführungsbeispiel wird die relative Lage des Ladebehälters 2 gegenüber der Erntemaschine einzig mittels Auswertung des optisch erfassten Kamerabilds der Kamera 6 ermittelt. Alternativ oder ergänzend ist auch ein technisch anderes Prinzip für die Ermittlung der relativen Lage denkbar. Beispielsweise könnten die Erntemaschine 1 und das Transportfahrzeug 3 und/oder der Ladebehälter 2 mit (nicht gezeigten) Positionssensoren (z.B. GPS-Navigationseinheiten) ausgestattet sein. Die Ermittlung der relativen Lage des Ladebehälters erfolgte dann durch Vergleich der jeweiligen Positionsdaten, die beispielsweise über Funk von Fahrzeug zu Fahrzeug übermittelt würden, und Übermittlung der ermittelten relativen Lage an die Steuereinheit 7. Ebenfalls wäre es denkbar, optisch ermittelte Lageinformationen mit per derartigen Positionssensoren ermittelten Lageinformationen abzugleichen, um die Genauigkeit der Lagebestimmung zu erhöhen.

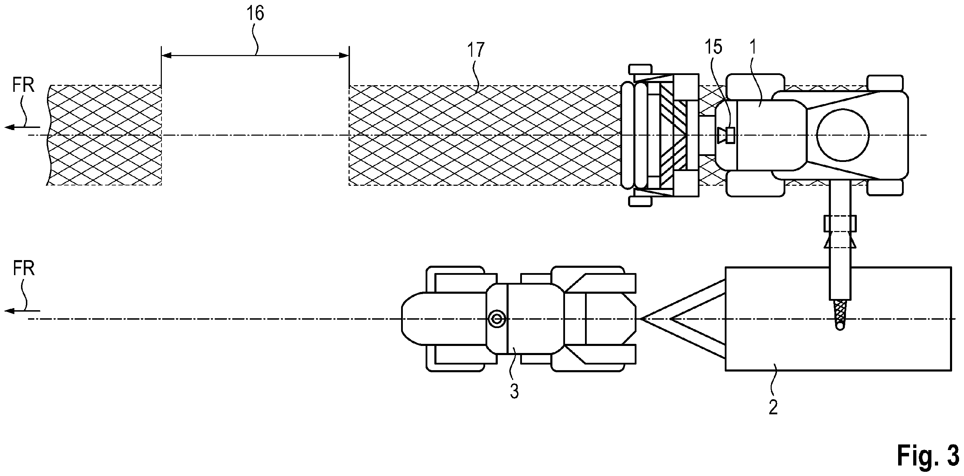

In Fig. 3 ist die Situation aus Figur 2 vereinfacht dargestellt. Der Sensor 15 erfasst den Erntegutschwad 17 im Vorfeld der Maschine. Der Sensor 15 erfasst auch die Lücke 16 im Erntegutschwad 17. Die Steuereinheit 7 prognostiziert, dass die Erntemaschine 1 im Bereich der Lücke 16 beschleunigen wird, da weniger Leistung zur Verarbeitung von Erntegut benötigt wird. Die Information über die zukünftige Fahrzustandsänderung, hier eine Beschleunigung in Fahrtrichtung FR, wird an den Fahrregler 11 des Transportfahrzeugs 3 übermittelt. Der Fahrregler 11 kann die Information nutzen, um die Beschleunigung des Transportfahrzeuges 3 zu beginnen, bevor die Kamera 6 eine Abweichung der relativen Lage des Ladebehälters 2 von der relativen Sollposition erkennt. Die Geschwindigkeit des Transportfahrzeugs 3 wird dadurch früher angepasst und der Ladebehälter 2 bleibt genauer an der Sollposition.

### Bezugszeichenliste

- 1: Erntemaschine
- 2: Ladebehälter
- 3: Transportfahrzeug
- 4: Überladeeinrichtung
- 5: Erntegutstrahl
- 6: Kamera
- 7: Steuereinheit
- 8: Drehantrieb
- 9: Hubzylinder
- 10: Klappenstellzylinders
- 11: Fahrregler
- 12: Maschinenrahmen
- 13: vertikale Achse
- 14: horizontale Achse
- 15: Kamera
- 16: Lücke
- 17: Erntegutschwad
- P: Zielpunkt
- FR: Fahrtrichtung
- S: Steuersignal
- α: Abwurfwinkel

## Patentansprüche

1. Verfahren zur Steuerung der Erntegutüberladung von einer selbstfahrenden landwirtschaftlichen Erntemaschine (1) in den Ladebehälter (2) eines Transportfahrzeugs (3),
wobei die Erntemaschine (1) eine Überladeeinrichtung (4) mit der Erntegut von der Erntemaschine (1) in den Ladebehälter (2) überladen wird umfasst,
wobei eine relative Lage des Ladebehälters (2) gegenüber der Erntemaschine (1) ermittelt wird,
**dadurch gekennzeichnet, dass** eine relative Sollposition des Ladebehälters (2) bestimmt wird,
wobei das Transportfahrzeug (3) so gesteuert wird, dass die relative Lage des Ladebehälters (2) im Wesentlichen der relativen Sollposition entspricht,
wobei bei der Steuerung mindestens eine Information über eine zukünftige Fahrzustandsänderungen der Erntemaschine (1) berücksichtigt wird.

2. Verfahren nach Anspruch einem der vorhergehenden Ansprüche, **dadurch gekennzeichnet, dass** die Information über zukünftige Fahrzustandsänderungen der Erntemaschine (1) eine Information über eine Geschwindigkeitsänderung und/oder eine Fahrtrichtungsänderung ist.

3. Verfahren nach einem der Ansprüche 1 oder 2, **dadurch gekennzeichnet, dass** eine Fahrgeschwindigkeit der Erntemaschine (1) von einem Geschwindigkeitsregler gesteuert wird, wobei dem Geschwindigkeitsregler eine Sollgeschwindigkeit vorgegeben wird und die geänderte Sollgeschwindigkeit als zukünftige Fahrzustandsänderungen der Erntemaschine (1) berücksichtigt wird.

4. Verfahren nach Anspruch einem der vorhergehenden Ansprüche, **dadurch gekennzeichnet, dass** das Erntefahrzeug (1) mit zumindest einem Sensor (15) zur Erkennung eines Vorfeldes ausgestattet ist, wobei der Sensor (15) eine Erntegutmenge vor dem Erntefahrzeug (1) erkennt, wobei aus der Erntegutmenge eine zukünftige Fahrzustandsänderungen der Erntemaschine (1) prognostiziert wird und die Information über die zukünftige Fahrzustandsänderungen der Erntemaschine (1) bei der Steuerung des Transportfahrzeugs (3) berücksichtigt wird.

5. Verfahren nach Anspruch einem der vorhergehenden Ansprüche, **dadurch gekennzeichnet, dass** das Erntefahrzeug (1) mit zumindest einem Sensor (15) zur Erkennung eines Vorfeldes ausgestattet ist, wobei der Sensor zumindest ein Hindernis vor dem Fahrzeug erkennt, wobei aus dem Hindernis eine zukünftige Fahrzustandsänderungen der Erntemaschine (1) prognostiziert wird und die Information über die zukünftige Fahrzustandsänderungen der Erntemaschine (1) bei der Steuerung des Transportfahrzeugs (3) berücksichtigt wird.

6. Verfahren nach Anspruch einem der vorhergehenden Ansprüche, **dadurch gekennzeichnet, dass** das Erntefahrzeug (1) mit zumindest einem Sensor zur Erkennung eines Vorfeldes ausgestattet ist, wobei der Sensor zumindest eine Form eines Erntegutschwads (17) erkennt, wobei aus der Form des Erntegutschwads (17) eine zukünftige Fahrzustandsänderungen der Erntemaschine (1) prognostiziert wird und die Information über die zukünftige Fahrzustandsänderungen der Erntemaschine (1) bei der Steuerung des Transportfahrzeugs (3) berücksichtigt wird.

7. Verfahren nach einem der vorhergehenden Ansprüche, **dadurch gekennzeichnet, dass** das Transportfahrzeug (3) von einem Fahrregler (11) gesteuert wird und dem Fahrregler (11) Informationen über zukünftige Fahrzustandsänderungen der Erntemaschine (1) zugeführt werden.

8. Verfahren nach Anspruch 7, **dadurch gekennzeichnet, dass** das Transportfahrzeug (3) und die Erntemaschine (1) eine Funkverbindung (S) zur Kommunikation herstellen.

9. System zur Steuerung der Erntegutüberladung von einer selbstfahrenden landwirtschaftlichen Erntemaschine (1) in den Ladebehälter (2) eines Transportfahrzeugs (3), umfassend
eine der Erntemaschine (1) zugeordnete Überladeeinrichtung (4), die zur Überladung von Erntegut von der Erntemaschine (1) in den Ladebehälter (2) vorgesehen ist, und
eine Erkennungseinrichtung (6), welche dazu vorgesehen und eingerichtet ist eine relative Lage des Ladebehälters (2) gegenüber der Erntemaschine (1) zu ermitteln,
**dadurch gekennzeichnet, dass** eine relative Sollposition des Ladebehälters (2) vorgegeben ist,
wobei ein Fahrregler (11) dazu vorgesehen und eingerichtet ist das Transportfahrzeug (3) so zu steuern, dass die relative Lage des Ladebehälters (2) im Wesentlichen der relativen Sollposition entspricht,
wobei der Fahrregler (11) dazu vorgesehen und eingerichtet ist mindestens eine Information über eine zukünftige Fahrzustandsänderungen der Erntemaschine (1) zu berücksichtigen.

10. System nach Anspruch 9, **dadurch gekennzeichnet, dass** die Erkennungseinrichtung eine Kamera (6), LIDAR oder ein System aus mehreren Kameras und/oder LIDAR aufweist.

11. System nach Anspruch 10, **dadurch gekennzeichnet, dass** die Kamera (6) und/oder das LIDAR an der Erntemaschine (1) angeordnet und zur optischen Erfassung des Ladebehälters (2) ausgerichtet ist.

12. System nach einem der Ansprüche 9 bis 11, **dadurch gekennzeichnet, dass** zwischen der Erntemaschine (1) und dem Transportfahrzeug (3) eine Funkverbindung (S) besteht.

13. System nach einem der Ansprüche 9 bis 12, **dadurch gekennzeichnet, dass** die Erntemaschine (1) einen Sensor (15) umfasst, wobei der Sensor (15) zur Erfassung eines Vorfeldes der Erntemaschine vorgesehen und eingerichtet ist, wobei der Sensor zur Erkennung einer Erntegutmenge vor dem Erntefahrzeug (1) vorgesehen und eingerichtet ist, wobei der Sensor (15) Informationen über die Erntegutmenge an eine Steuereinrichtung (7) überträgt, wobei die Steuereinrichtung (7) dazu vorgesehen und eingerichtet ist aus den Informationen über die Erntegutmenge eine zukünftige Fahrzustandsänderungen der Erntemaschine (1) zu prognostizieren und die Information über die zukünftige Fahrzustandsänderungen der Erntemaschine (1) an den Fahrregler (11) zu übertragen.

14. System nach einem der Ansprüche 9 bis 13, **dadurch gekennzeichnet, dass** die Erntemaschine (1) einen Sensor (15) umfasst, wobei der Sensor (15) zur Erfassung eines Vorfeldes der Erntemaschine (1) vorgesehen und eingerichtet ist, wobei der Sensor (15) zur Erkennung zumindest eines Hindernisses vor der Erntemaschine (1) vorgesehen und eingerichtet ist, wobei der Sensor (15) Informationen über das Hindernis an eine Steuereinrichtung (7) überträgt, wobei die Steuereinrichtung (7) dazu vorgesehen und eingerichtet ist aus den Informationen über das Hindernis eine zukünftige Fahrzustandsänderungen der Erntemaschine (1) zu prognostizieren und die Information über die zukünftige Fahrzustandsänderungen der Erntemaschine (1) an den Fahrregler (11) zu übertragen.

15. System nach einem der Ansprüche 9 bis 14, **dadurch gekennzeichnet, dass** die Erntemaschine (1) einen Sensor (15) umfasst, wobei der Sensor (15) zur Erfassung eines Vorfeldes der Erntemaschine (1) vorgesehen und eingerichtet ist, wobei der Sensor (15) zur Erkennung zumindest eines Erntegutschwads (17) vor der Erntemaschine (1) vorgesehen und eingerichtet ist, wobei der Sensor (15) Informationen über den Erntegutschwad (17) an eine Steuereinrichtung (7) überträgt, wobei die Steuereinrichtung (7) dazu vorgesehen und eingerichtet ist aus den Informationen über den Erntegutschwad (17) eine zukünftige Fahrzustandsänderungen der Erntemaschine (1) zu prognostizieren und die Information über die zukünftige Fahrzustandsänderungen der Erntemaschine (1) an den Fahrregler (11) zu übertragen.
